# EUROPEAN PATENT APPLICATION

(11) **EP 1 031 282 A1**
(43) Date of publication of application: **30.08.2000**
(21) Application number: 99200541.3
(22) Date of filing: 25.02.1999
(51) Int. Cl.: A21C 9/06

(54) **Device for making a snack**

(71) Applicant: Bakker Lekkerkerk Holland B.V., 2941 BW Lekkerkerk (NL)
(72) Inventor: Den Ouden, Ton c/o Bakker Lekkerkerk Holland B.V., 2941 BW Lekkerkerk (NL)
(74) Representative: Seerden, Adrianus Maria

(57) **Abstract**

Device for making a snack/meal component, which snack/meal (1) component has a content (2) with a rectangular basic shape, in which the content is provided with a sprig (3) of herb butter or the like, in which the content with the sprig is enveloped by a substantially rectangular pancake of dough (4). The device comprises a content supply device (7) for supplying a content with a sprig (3), the content supply device (7) being provided with an input end (8) and an output end (9), a pancake supply device (10) for supplying the pancake (4), the pancake supply device (10) being provided with an input end (11) and an output end (12), a transfer device (13) for transferring a content (2) with sprig from the output end (9) of the content supply device (7) to a pancake (4) concerned near the output end (12) of the pancake supply device (10), a folding device (15) for folding the pancake (4) around the content (2) so that at each corner an ear (5) remains standing up, a folding-pressing device (16) for folding down and pressing down each ear (5) of the pancake, a squeeze device (17) for squeezing the base of each ear (5) together, and a pressing device (18) for pressing the tip of each ear (5) flat in a non-abutting manner. The folding device (15) for folding the pancake around the content is provided with four rolls (44) placed opposite each other in pairs, in which between the rolls a passage space (47) for the snack (1) is formed, each roll being attached to a lever system (42) so that each roll (44) can move parallel to the snack and with a stamper (51) for pressing a pancake (4) with a content with sprig (3) thereon through the passage space (47).

## Description

The present invention relates to a device for making a snack or meal component, which snack has a content, such as for instance meat with herbs or a vegetarian product, with a rectangular base shape, the contents being provided with a sprig of herb butter or the like, in which the content with sprig is enveloped by a substantially rectangular pancake of dough, for instance puff pastry.

Such a snack is usually made by manually folding the rectangular pancake of dough around the content and sufficiently pressing it, as a result of which at each corner an ear remains standing up. Each ear is manually pressed closed at the base and the tip is pressed flat in a non-abutting manner. It is desirable that the size of the content and pancake are such that after folding the pancake is closed onto the sprig. This way of manufacturing is very laborious and labour-intensive.

It is an object of the present application to provide a device for drastically mechanizing the manufacturing of such snacks.

To that end the present invention provides a device for making a snack, which snack has a content with a rectangular basic shape, in which the content is provided with a sprig of herb butter or the like, in which the content with the sprig is enveloped by a substantially rectangular pancake of dough, the device being provided with:
a content supply device for supplying a content with a sprig, the content supply device being provided with an input end and an output end,
a pancake supply device for supplying the pancake, the pancake supply device being provided with an input end and an output end,
a transfer device for transferring a content with sprig from the output end of the content supply device to a pancake concerned near the output end of the pancake supply device,
a folding device for folding the pancake around the content so that at each corner an ear remains standing up,
a squeeze device for squeezing the base of each ear together, and
a pressing device for pressing the tip of each ear flat in a non-abutting manner.

When the folding device for folding the pancake around the content in such a manner that at each corner an ear remains standing up, is provided with four rolls placed opposite each other in pairs, in which between the rolls a passage space is formed for the snack, each roll being attached to a resilient lever system so that each roll can move parallel to the snack and with a stamper for pressing a pancake with a content with sprig placed thereon through the passage space, a folding of the pancake around the content is obtained in a mechanical way which is extremely reproducible and can be performed without damaging the snack.

Some embodiments of a device according to the present invention will now by way of example be described in the basis of the accompanying drawing in which:
Figure 1A, 1 B and 1C schematically show a snack made by means of the device according to the present invention;
Figure 2 schematically shows a top view of the device according to the invention;
Figure 3 schematically shows a side view of the device according to the present invention;
Figure 4 schematically shows a side view of a content supply device of a device according to the present invention;
Figure 5 schematically shows a side view of a pancake supply device of a device according to the present invention;
Figure 6A and 6B schematically show a top view and a side view, respectively, of a transfer device of a device according to the present invention;
Figure 7A and 7B schematically show a top view and a side view, respectively of a folding device of a device according to the present invention;
Figure 8 schematically shows a side view of the folding pressing device of a device according to the present invention, and
Figure 9A and 9B schematically show a side view and top view, respectively, of the squeeze device of a device according to the invention.

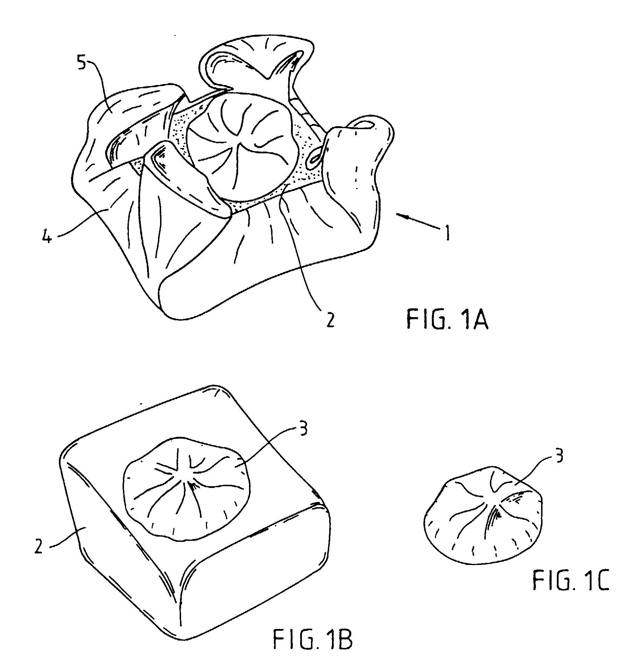

The present invention will be described on the basis of a device for making a snack, which snack has a deep-frozen content of meat with herbs with a rectangular (including square) basic shape, the content being provided with a sprig of herb butter and the content with sprig being enveloped by a substantially rectangular pancake of dough puff pastry. It will be clear however that the snack or meal component could also have another content, such as a vegetarian content or a mixture of meat and vegetarian products. Furthermore the sprig could also be of another foodstuff such as cheese, garlic or the like, and the pancake can also be made of a different kind of dough. In figure 1A such a snack 1 is schematically shown, in which the content 2 for instance is minced meat, and the sprig 3 of herb butter is placed on or in a cavity in the piece of minced meat (also see figures 1B and 1C). The pancake puff pastry 4 has been folded around the content 2 so that ears 5 are created, which are pressed flat in a non-abutting manner.

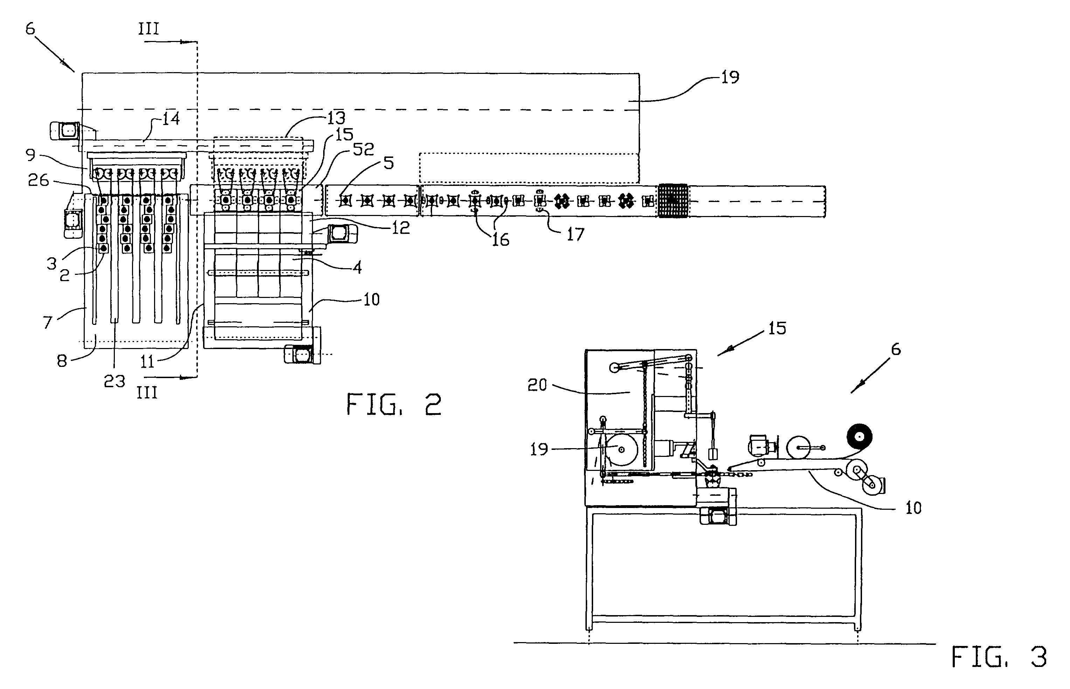

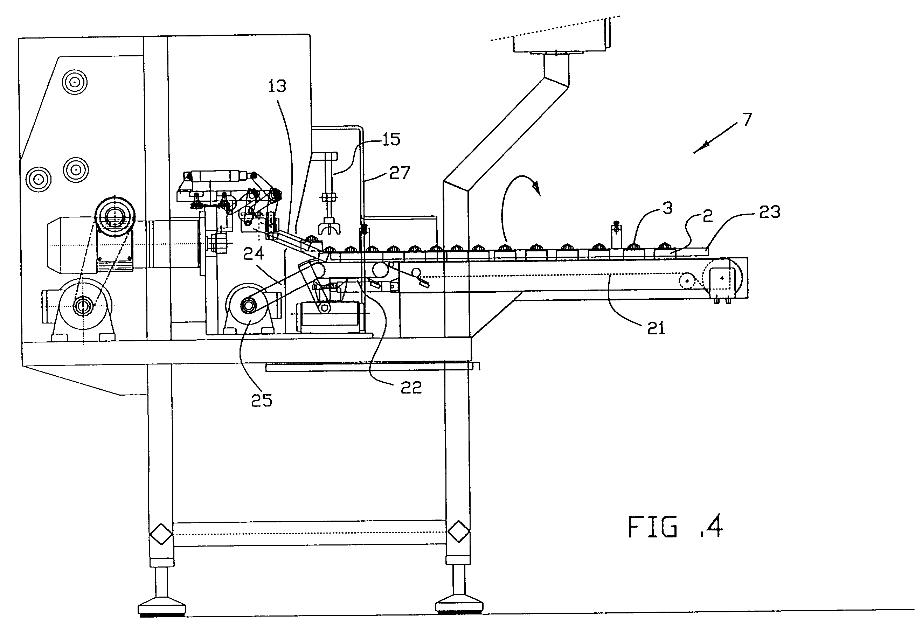

Figures 2 and 3 schematically show a top view and side view, respectively, of a device 6 according to the invention. The device 6 comprises a content supply device 7 for supplying a content 2 with sprig 3, in which the content supply device 7 is provided with an input end 8 and an output end 9. Furthermore the device 6 comprises a pancake supply device 10 for supplying pancakes of puff pastry 4, in which the pancake supply device 10 is provided with an input end 11 and a output end 12. A transfer device 13 transfers the content 2 with sprig 3 from the output end 9 of the content supply device 7 to a pancake 4 concerned on a folding device 15. The transfer device 13 is provided with a guide 14 which permits the moving of the content 2 with sprig 3 from the output end 9 of the content supply device 7 to a folding device 15 behind the pancake supply device 10. A folding device 15 folds the pancake 4 around the content 2, so that at each corner an ear 5 remains standing up. A folding pressing device 16 folds each ear of the pancake 4 down and presses it down. A squeeze device 17 squeezes the nose of each ear 5 together, and a pressing device 18 presses the tip of each ear 5 flat in a non-abutting manner. The separate devices will be described in more detail below. Although the separate devices can be driven by separate drives, it is preferred that all devices are driven by one common drive. In the exemplary embodiment shown said common drive contains a curve disc 19. With the exception of the content supply device 7 and the pancake supply device 10 all devices are for instance driven via levers by the curve disc. This is schematically shown in figure 3 by the folding device 15 which is connected to the curve disc 19 by means of a lever system 20.

Figure 4 schematically shows a side view of the content supply device 7 of a device according to the present invention. The content supply device 7 is formed by a conveyor belt for putting on 21, a conveyor belt for taking off 22, and side guides 23 for the content 2 with sprig 3. The side guides 23 can preferably be folded away entirely to the side, to permit easy cleaning. The conveying devices of the conveyor belts 21 and 22 are parallel, and the conveyor belts are in line with each other. In figure 2 it is shown that four rows of content with sprig lying adjacent to each other, are present, but it will be clear that the invention is not limited to that number, and that smaller and larger numbers are also possible.

The conveyor belts 21 and 22 are driven such that the conveyor belt for taking off 22 remains full on the four rows, whereas the conveyor belt for putting on 21 only moves when the last four positions of the conveyor belt for taking off 22 are empty and when the operator has put a product on each row. The conveyor belt for putting on 21 does not move when the four rows are filled for instance for 75%. Preferably each of the conveyor belts 21 and 22 is driven by a geared belt 24 with a motor reductor 25 (for the sake of clarity of the drawing this has only been shown for the conveyor belt 22). The conveyor belt for taking off 22 can for instance be formed by four adjacent geared belts, as a result of which the conveyor belt can be designed narrower than it is long.

In order to freely take off the products and position them neatly, the content supply device 7 is further provided with a positioning stop 26 (figure 2) for content 2 with sprig 3, which stop is placed near the input end 9. The positioning stop 26 is preferably pneumatically operated and also serves to have the content received unimpeded. Furthermore a fixed auxiliary list may be present to prevent the products from falling into the device in case of a failure. These products are pressed into their positions again by the operated stop 26. At the location of taking off, so over the conveyor belt 22 a shielding 27 is placed which can be folded away for instance together with the side guide 23.

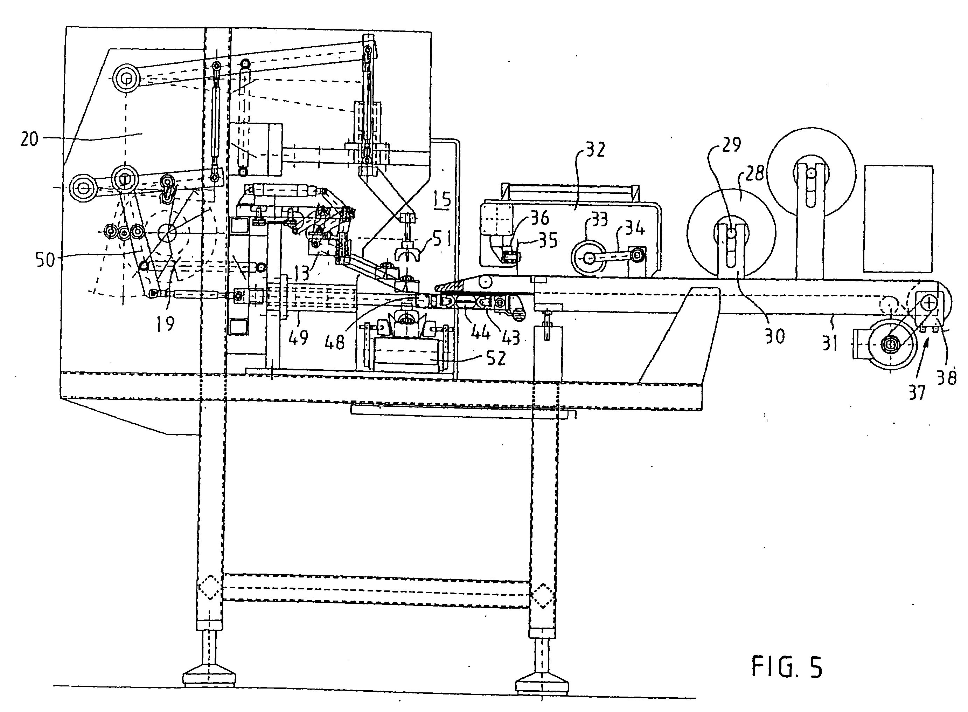

Figure 5 schematically shows a side view of the pancake supply device 10 of a device according to the present invention. The pancake material 28 is supplied on a roll. The roll is placed on an axis 29 and put between two uprights 30 so that the roll rests on a pancake conveyor belt 31 and is thus able to move along easily with the conveyor belt 31. The pancake material 28 is for instance put on the conveyor belt 31 manually and prepared thus that it can effortlessly be processed. The conveyor belt 31 is preferably driven by an encoder with frequency control 37.

The pancake material 28 is cut in the right dimensions by a length and transverse cutting device 32. For the longitudinal cut for instance five knives 33 are positioned. The knives 33 are preferably supported on a ball bearing, while the hinges of the levers 34 are provided with slide bearings. Axial confinement takes place by means of clamping rings which is known per se. The knives 33 with the lever 34 of course have sufficient weight to cut through the pancake material. The transverse cut is for instance also obtained by means of a round knife 35. This round knife 35 is also on a ball bearing and suspended from a lever 36. The movement for instance takes place by means of a cylinder without a piston and with its own guiding. In both end positions the lever 36 of the knife 35 runs against a run-on so that the knife will lie free there. An encoder 38, coupled to the drive, ensures that the right length will be cut off. Possibly means can be provided for wetting the pancake material.

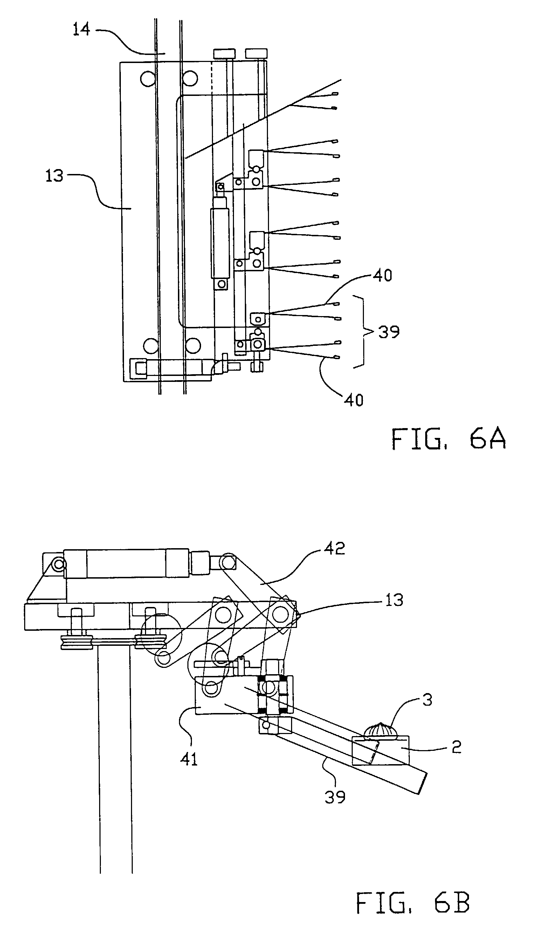

In figure 6A and 6B a top view and side view, respectively, are schematically shown of a transfer device 13 of a device according to the present invention. The transfer device 13, in this case, is provided with four grippers 39 with gripper arms 40. The grippers are simultaneously, preferably pneumatically driven and move symmetrically. The gripper arms 40 are made from stainless spring steel and are of such dimensions (cross-section) that all products in the four rows are grabbed within their tolerance. The grippers 39 are supported on a ball bearing and are for instance provided with an extra scraper sealing. A gripper beam 41 is suspended in a pneumatically operated parallel lever system 42. As a result the content with sprig obtains a horizontal and a vertical movement at the same time. The whole can then be moved back and forth over the guide 14, the driving for instance taking place via geared belts by means of a brake engine reducer. The active end positions can be provided with proximity switches or proximity sensors and stops respectively.

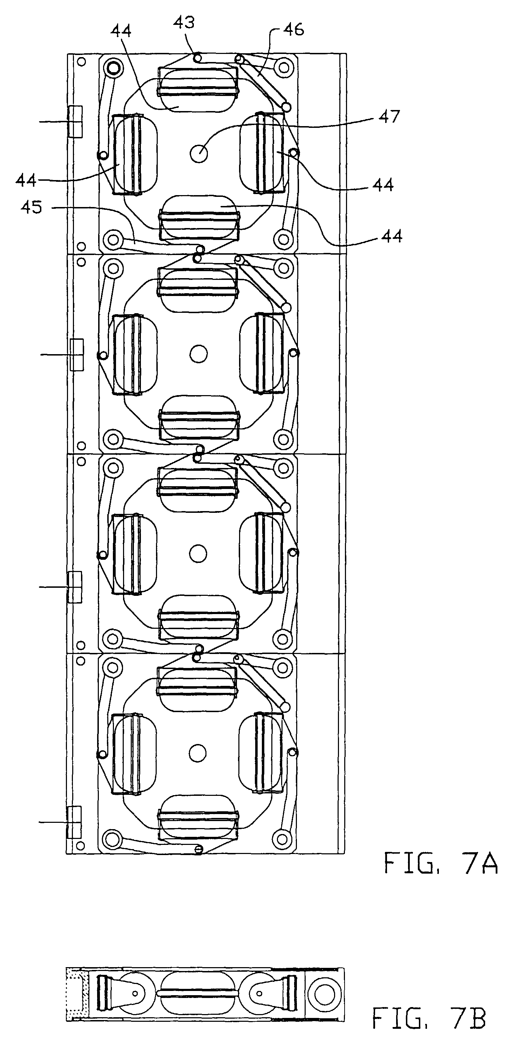

Figure 7A and 7B show a top view and a side view, respectively, of a roll unit 43 of a folding device 15 of a device according to the present invention. The roll unit 43 is provided with four sub units each with four rolls 44 placed opposite each other in pairs, for instance with a diameter of 25 mm and preferably made of silicone rubber. Between the rolls 44 a passage space 47 for the content with sprig is formed. Each roll is attached to a lever system 45, so that a roll 44 can move parallel to the side of a content with sprig. The lever system 45 is moved to the inside by means of a rotary spring 46. The sub units are supported in a frame 48 (figure 5), which in its turn is attached on a linear guide 49, which can consist of two axes which are supported in two ball circulating bushes.

As clearly appears from figure 5, the drive of the movement of the unit takes place by means of the curve disc 19 via a connecting rod with bar coupling. The movement in this case consists of a so-called crooked sine function, with the exception of the movement in which the pancake touches the folding device to be laid off, the movement is linear then. The starting and end of said linear movement again has a crooked sine function. The curve disc 19 is divided so that the axis does not need to be demounted when being replaced or when being serviced. The lever 50 is pressed against the curve disc 19 with a draw spring. Said draw spring is attached via a ball bearing to the lever 50, and in this way a limitation to the life span is prevented.

After the pancake supply device 10 has placed a pancake on the rolls 44 and the transfer device 13 has placed the content with sprig on the pancake, the whole is pressed through the passage space between the rolls 44 by a stamper 51 (figure 5). The rolls 44 press the pancake against the side of the content, leaving room for the ears. During the starting off of the ears, so during pressing the rolls 44 to the outside, the stamper 51 moves as steady as possible. During pressing down the movement is accelerated. After the pancake with content and sprig is pressed through the roll 4, the whole ends up on a conveyor device, for instance a conveyor belt 52 (figure 2).

Each stamper 51, in the present case, is guided by two axes with ball circulating bushes. The movement is transferred by the lever system 20, controlled by the curve disc 19. The movement is a crooked sine function.

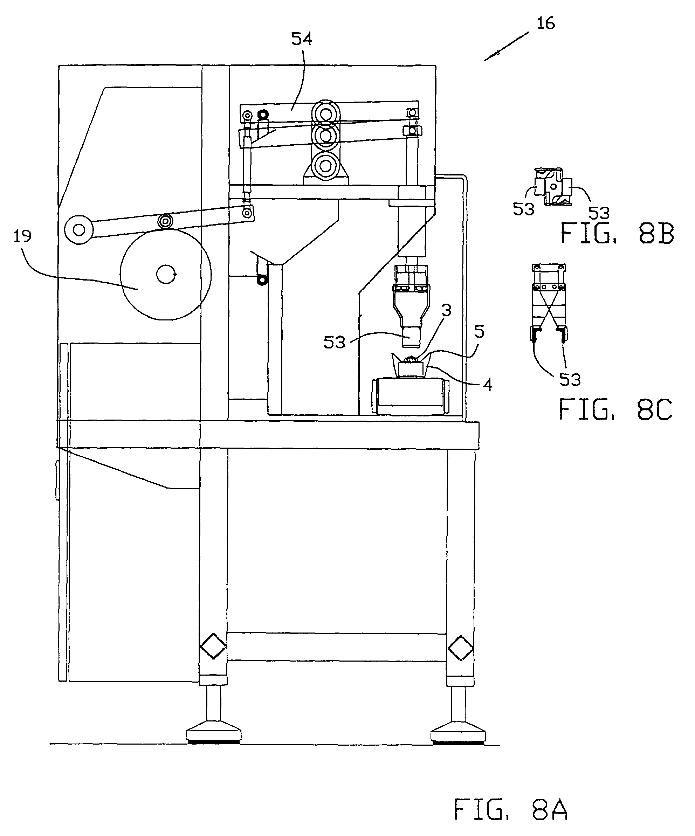

Figure 8 (consisting of figures 8A, 8B and 8C) schematically shows a side view of the folding-pressing device 16 of a device according to the present invention. The folding-pressing device 16 folds each ear 5 of the pancake 4 down and presses it down, and in the present case comprises four sub units which each fold and press down one half of the snack. Each sub unit is provided with two folding shoes 53 which move to each other. The folding shoes 53 are made of silicone rubber. Each folding shoe 53 pushes the upstanding lip of the pancake in the direction of the sprig 3 and at the last moment presses it down. The folding shoes 53 here preferably have bulging shapes, so that when the folding shoe 53 lets go of the pancake 4, the pancake no longer sticks to the folding shoe. Again the movement of the folding shoes 53 is driven via a lever system 54 driven by the curve disc 19.

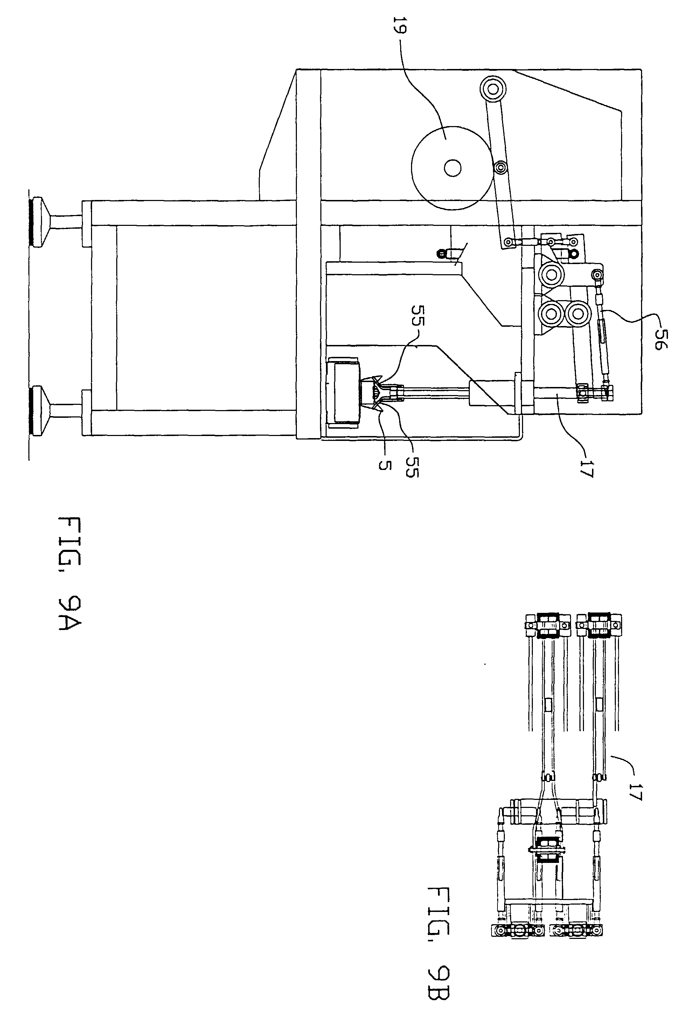

Figure 9A and 9B schematically show a side view and a top view, respectively, of a squeeze device 17 of a device according to the present invention. The squeeze device 17 squeezes the base of each ear 5 together and is provided with two tong-halves 55 moving counter to each other which form tongs. Each tong-half 55 consists of four pins provided with a silicone covering. When the pancake with content and sprig is moved under the squeeze device 17 the tongs are lowered to the level of the ears with maximally opened tongs. The tongs are now pressed closed. The necessary force is obtained by for instance a spring construction in one of the connecting rods of the swivel levers. Again the movement of the squeeze device 17 is controlled by a lever system 56, provided with swivel levers, which is driven by the curve disc 19.

A pressing device 18 (figure 2) for pressing the tip of each ear flat in a non-abutting manner, is provided with four pressing shoes that move to each other in pairs. Said device can be compared to the device for folding and pressing, only now four instead of two arms are used. The tongs are also positioned turned 45° with respect to the folding shoes. The rest of the construction can be compared to the one of the device 16 and as a result it will not be described here further.

Although the present invention is described above on the basis of exemplary embodiments, it will be clear the invention will not be limited to them. For instance the device for cutting the dough, can be provided with nozzles instead of knives, which nozzles discharge jets of water as a result of which the dough is cut. It is also possible to supply dough pre-cut elsewhere.

## Claims

1. Device for making a snack/meal component, which snack/meal component has a content with a rectangular basic shape, in which the content is provided with a sprig of herb butter or the like, in which the content with the sprig is enveloped by a substantially rectangular pancake of dough, the device being provided with:
a content supply device for supplying a content with a sprig, the content supply device being provided with an input end and an output end,
a pancake supply device for supplying the pancake, the pancake supply device being provided with an input end and an output end,
a transfer device for transferring a content with sprig from the output end of the content supply device to a pancake concerned near the output end of the pancake supply device,
a folding device for folding the pancake around the content so that at each corner an ear remains standing up,
a squeeze device for squeezing the base of each ear together, and
a pressing device for pressing the tip of each ear flat in a non-abutting manner.

2. Device according to claim 1, in which the content supply device for supplying a content with sprig, the content supply device being provided with an input end and an output end, is formed by a conveyor belt for putting on, a conveyor belt for taking off and side guides for the content with sprig, the conveyance direction of the conveyor belts being parallel and the conveyor belts being in line with each other.

3. Device according to claim 2, in which each of the conveyor belts is driven by a geared belt with a motor reductor.

4. Device according to claim 2 or 3, in which the content supply device is further provided with a positioning stop for content with sprig, which stop is placed near the output end.

5. Device according to claim 4, in which the positioning stop can be folded away, preferably can be folded away pneumatically.

6. Device according to claim 1, in which the pancake supply device for supplying the pancake, the pancake supply device being provided with an input end and an output end, is provided with a storage roll of pancake material supported on an axis and two standards, a pancake conveyor belt for conveying the pancake material to the output end, the support of the storage roll being such that the pancake material of the storage roll lies on the pancake conveyor belt.

7. Device according to claim 6, in which the pancake conveyor belt is driven by an encoder with frequency control.

8. Device according to claim 6 or 7, in which the pancake supply device is provided with a pancake length cutting device.

9. Device according to claim 8, in which the pancake length cutting device is provided with a number of knives.

10. Device according to claim 9, in which the knives are carried by means of lever hinges provided with slide bearings, which lever hinges can be operated such that each knife can be pressed on the pancake material on the conveyor belt.

11. Device according to claim 10, in which the lever hinges exert such pressure on the pancake material that the pancake material is cut.

12. Device according to any one of the claims 6 to 11, in which the pancake supply device is provided with a pancake transverse cutting device.

13. Device according to claim 12, in which the pancake transverse cutting device is provided with a round knife supoprted on a ball bearing, which knife is suspended from a lever.

14. Device according to claim 1, in which the transfer device for transferring a content with sprig from the output end of the content supply device on a pancake concerned near the output end of the pancake supply device is provided with grippers and gripper arms.

15. Device according to claim 14, in which the grippers are pneumatically driven.

16. Device according to claim 14 or 15, in which the grippers move symmetrically.

17. Device according to claim 14, 15 or 16, in which the gripper arms are made from stainless spring steel.

18. Device according to claim 1, in which the folding device for folding the pancake around the content so that on each corner an ear remains standing upright, is provided with four rolls placed opposite each other in pairs, in which between the rolls a passage space is formed for the snack/meal component, each roll being attached to a lever system so that each roll can move parallel to the snack/meal component and with a stamper for pressing a pancake with a content with sprig thereon through the passage space.

19. Device according to claim 18, in which each roll is made of silicone rubber.

20. Device according to claim 18, in which each lever system can be moved to the inside by means of a rotary spring, in the direction of the space.

21. Device according to claim 18, in which the stamper is guided by axes with ball circulating bushes.

22. Device according to claim 18, in which the movement of the stamper is controlled by a curve disc.

23. Device according to claim 1, in which a folding-pressing device for folding and pressing each ear of the pancake is provided for folding and pressing each ear of the pancake, which folding-pressing device is provided with two folding shoes that can be moved to each other.

24. Device according to claim 1, in which the squeezing device for squeezing the base of each ear together is provided with two tong-halves that move counter to each other.

25. Device according to claim 24, in which each of the tong-halves is attached to a swivel lever with driving rods and the tong-halves can be moved to each other by means of a spring construction in one of the driving rods of the swivel levers.

26. Device according to claim 1, in which the pressing device for pressing the tip of each ear flat in a non-abutting manner is provided with four pressing shoes that move to each other in pairs.

27. Device according to claim 23 and 26, in which the pressing shoes are positioned turned about 45° with regard to the folding shoes.
